# EUROPEAN PATENT APPLICATION

(11) **EP 4 071 859 A1**
(43) Date of publication of application: **12.10.2022**
(21) Application number: 19955144.1
(22) Date of filing: 26.12.2019
(51) Int. Cl.: H01M 4/525, H01M 4/505, H01M 4/36, H01M 4/62, H01M 10/052, C01G 53/00, C01B 25/30

(54) **POSITIVE ACTIVE MATERIAL, PREPARATION METHOD THEREFOR, AND LITHIUM SECONDARY BATTERY HAVING POSITIVE ELECTRODE COMPRISING SAME**

(30) Priority: 05.12.2019 KR 20190160965
(71) Applicant: SM Lab Co., Ltd., Ulsan 44953 (KR)
(72) Inventor: SEO, Min Ho, Hanam-si, Gyeonggi-do 12946 (KR); KIM, Ji Young, Ulju-gun, Ulsan 44920 (KR)
(74) Representative: Loyer & Abello
(86) International application number: PCT/KR2019/018507
(87) International publication number: WO 2021/112323

(57) **Abstract**

The present disclosure relates to a positive active material including a lithium transition metal oxide substituted with Na, W, Mg, Ti, and S, a method of preparing the same, and a lithium secondary battery having a positive electrode including the positive active material.

## Description

### TECHNICAL FIELD

The present disclosure relates to a novel positive active material, a method of preparing the same, and a lithium secondary battery having a positive electrode including the positive active material.

The present disclosure was made with funds from the Korean Ministry of Trade, Industry, and Energy under Project No. P0009541 titled "Development of high strength/long life/high stability Ni-Rich NCA (> 210mAh/g, @ 4.3V) positive electrode material for medium-to-large sized lithium secondary battery".

### BACKGROUND ART

Lithium secondary batteries were commercialized by Sony in 1991, and demand has been rapidly increasing from a variety of fields from small appliances such as mobile IT products to medium-to-large sized electric vehicles and energy storage systems. Particularly, although a low-cost high-energy positive electrode material is essential for medium-to-large sized electric vehicles and energy storage systems, cobalt, the main raw material of monocrystalline LiCoO₂(LCO), which is a currently commercialized positive active material, is expensive.

Therefore, as a positive active material for a medium-to-large sized secondary battery, Ni-based positive active material represented by LiNiₓCo_{y}Mn_{z}O₂ (NCM, x+y+z=1) and LiNiₓCo_{y}Al_{z}O₂ (NCA, x+y+z=1), in which a part of Co is substituted with other transition metals, is used instead of LCO, and these NCM and NCA based-positive active materials have an advantage in that nickel, the main raw material, is inexpensive and has a high reversible capacity. In particular, NCM and NCA, which have 50 mol% or more of Ni, are attracting attention in terms of high capacity. Generally, such Ni-based positive active materials are prepared by mixing a transition metal compound precursor synthesized by a co-precipitation method with a lithium source and then synthesizing by using a solid-phase synthesis method. However, the synthesized Ni-based positive electrode material is present in the form of secondary particles, which are formed by aggregation of small primary particles, and in the long-term, there is an issue of microcracks forming inside the secondary particles during charge/discharge processes. Microcracks induce side reactions between a new interface and an electrolyte solution, resulting in deterioration of battery performance, such as reduced stability due to generation of gas and degradation of battery performance due to electrolyte solution depletion. In addition, an increase in electrode density (> 3.3 g/cc), which is required for the implementation of high energy density, causes a plunge in the initial lifespan by inducing the collapse of the secondary particles and depletion of the electrolyte solution due to side reactions with the electrolyte solution. In the end, Ni-based positive active materials in a form of secondary particles synthesized by a co-precipitation method in the art are not capable of implementing high energy density.

In order to solve the problems of the Ni-based positive active material in the form of secondary particles, monocrystalline Ni-based positive active materials have been studied recently. Monocrystalline Ni-based positive active materials are capable of implementing excellent electrochemical performance, because particles do not collapse when electrode density increases (> 3.3 g/cc) in order to implement high energy density. However, such monocrystalline Ni-based positive active materials, when electrochemically evaluated, have issues of structural and/or thermal instability due to unstable Ni³⁺ and Ni⁴⁺ ions leading to reduced battery stability. Therefore, for the development of high-energy lithium secondary batteries, there is still a demand for techniques for stabilizing unstable Ni ions of monocrystalline Ni-based positive active materials.

### DESCRIPTION OF EMBODIMENTS

### TECHNICAL PROBLEM

An aspect is to provide a positive active material having high energy density and improved long life characteristics, by stabilizing the above-described unstable Ni ions of monocrystalline Ni-based positive active material.

### SOLUTION TO PROBLEM

According to an aspect, a positive active material including the lithium transition metal oxide represented by Formula 1 below is provided:

Formula 1 Li₁₋ₓNaₓM_{1-(α+β+γ)}W_{α}Mg_{β}Ti_{γ}O₂₋ₐSa,

wherein in Formula 1,
M includes one or more elements selected from alkali metal elements, alkali earth metal elements, transition metal elements, post-transition metal elements, and non-metallic elements, other than W, Mg, Ti, Na, and S, and
0<x≤0.01, 0<α≤0.01, 0<β≤0.005, 0<γ≤0.005, 0<a≤0.01, and 0<α+β+γ≤0.02.

According to another aspect, a method of preparing a positive active material including: obtaining a precursor compound by mixing a Li-containing compound, a Na-containing compound, a W-containing compound, a Mg-containing compound, a Ti-containing compound, an M-containing compound, and an S-containing compound; and
heat-treating the precursor compound to obtain a positive active material including a lithium transition metal oxide represented by Formula 1.

According to still another aspect, a lithium secondary battery is provided, and the lithium secondary battery includes: a positive electrode including the positive active material; negative electrode; and electrolyte.

### ADVANTAGEOUS EFFECTS OF DISCLOSURE

A positive active material including the lithium transition metal oxide represented by Formula 1 according to an aspect of the present disclosure is a single crystal and a single particle, and unstable Ni ions in the high-Ni-based lithium transition metal oxide are stabilized when a part of Li in the single crystal is substituted by Na, a part of transition metal is substituted by W, Mg, and Ti, and a part of O is substituted by S, and as a result, capacity per unit volume and lifespan stability of the battery is improved.

### BRIEF DESCRIPTION OF DRAWINGS

FIG. 1 is scanning electron microscope (SEM) photographs of positive active materials of Example 1 and Comparative Example 1.
FIG. 2 is a graph showing particle size distribution of positive active materials of Example 1 and Comparative Example 1.
FIG. 3 is a graph of lifespan retention rate of half-cells of Example 5 and Comparative Examples 8 to 12.
FIG. 4 is a graph of lifespan retention rate of half-cells of Example 6 and Comparative Example 13.
FIG. 5 is a graph of lifespan retention rate of half-cells of Example 7 and Comparative Example 14.
FIG. 6 is a graph of lifespan retention rate of half-cells of Example 5 and Example 8.
FIG. 7A is an X-ray diffraction (XRD) graph for a positive active material of Example 4, and FIG. 7B is an enlarged XRD graph at 2θ = 20° to 30°.
FIG. 8 is a schematic diagram of a lithium battery according to an example embodiment.

### <Explanation of reference numerals designating the major elements of the drawings>

1: Lithium battery 2: Negative electrode
3: Positive electrode 4: Separator
5: Battery Case 6: Cap Assembly

### MODE OF DISCLOSURE

The present inventive concept described hereinafter may be modified in various ways, and may have many examples, and thus, certain examples are illustrated in the drawings, and are described in detail in the specification. However, this does not intend to limit the present inventive concept within particular embodiments, and it should be understood that the present disclosure includes all the modifications, equivalents, and replacements within the idea and technical scope of the present inventive concept.

Terms used herein were used to describe particular examples, and not to limit the present inventive concept. As used herein, the singular of any term includes the plural, unless the context otherwise requires. The expression of "include" or "have" used herein indicates the existence of a characteristic, a number, a phase, a movement, an element, a component, a material or a combination thereof, and it should not be construed to exclude in advance the existence or possibility of existence of at least one of other characteristics, numbers, movements, elements, components, materials or combinations thereof. As used herein, "/" may be interpreted to mean "and" or "or" depending on the context.

In the drawings, a thickness is enlarged or reduced to clearly represent various layers and regions. The same reference numerals were attached to similar portions throughout the disclosure. As used herein throughout the disclosure, when a layer, a film, a region, or a plate is described to be "on" or "above" something else, it not only includes the case that it is right above something else but also the case when other portions are present in-between. Terms like "first", "second", and the like may be used to describe various components, but the components are not limited by the terms. The terms are used merely for the purpose of distinguishing one component from other components.

Hereinafter, a positive active material, a method of preparing the same, and a lithium secondary battery including a positive electrode including the positive active material according to example embodiments will be described in more detail.

The positive active material according to an embodiment may include a lithium transition metal oxide represented by Formula 1:

Formula 1 Li₁₋ₓNaₓM_{1-(α+β+γ)}W_{α}Mg_{β}Ti_{γ}O₂₋ₐSa,

wherein in Formula 1, M, X, α, β, γ, and a are as specifically described below.

In the lithium transition metal oxide represented by Formula 1, a part of Li is substituted by Na, a part of M is substituted by W, Mg, and Ti, and a part of O is substituted by S, and when a lithium secondary battery including the same is charged/discharged, structural stability of the lithium transition metal oxide is improved, and thereby, capacity per unit volume is increased and lifespan stability is improved.

In addition, in a high-Ni-based lithium transition metal oxide in which M includes Ni, substitution of small amounts of W, Mg and Ti induces reduction of unstable Ni ions present in the lithium transition metal oxide, such as Ni^{3+,} Ni⁴⁺to stable forms of nickel ions of Ni²⁺, and thus, deterioration of positive active material and capacity deterioration due to side reactions of unstable Ni ions and electrolyte solution during charge/discharge processes are suppressed.

According to an embodiment, in Formula 1, M may include one or more elements selected from alkali metal elements, alkali earth metal elements, transition metal elements, post-transition metal elements, and non-metallic elements, other than W, Mg, Ti, Na, and S.

For example, M may include one or more selected from K, Rb, Cs, Fr, Be, Ca, Sr, Ba, Ra, Sc, Y, La, Zr, Hf, V, Nb, Ta, Cr, Mo, Mn, Tc, Re, Fe, Ru, Os, Co, Rh, Ir, Ni, Pd, Pt, Cu, Ag, Au, Zn, Cd, Hg, B, Al, Ga, In, TI, C, Si, Ge, Sn, Pb, N, P, As, Sb, Bi, N, P, As, Sb, Bi, Se, Te, and Po.

According to an embodiment, M may include one or more elements selected from alkali metal elements, alkali earth metal elements, transition metal elements, post-transition metal elements, and non-metallic elements, other than W, Mg, Ti, Na, and S.

For example, M may include one or more selected from Be, Ca, Sr, Ba, Ra, Sc, Y, La, Zr, Hf, V, Nb, Ta, Cr, Mo, Mn, Tc, Re, Fe, Ru, Os, Co, Rh, Ir, Ni, Pd, Pt, Cu, Ag, Au, Zn, Cd, Hg, B, Al, Ga, In, TI, C, Si, Ge, Sn, Pb, N, P, As, Sb, Bi, N, P, As, Sb, Bi, Se, Te, and Po.

According to an embodiment, M may include one or more elements selected from Ni, Co, Mn, Al, V, Ca, Zr, B, and P.

According to an embodiment, M may include one or more elements selected from Ni, Co, Mn, Al, V, Ca, Zr, B, and P. According to an embodiment, M may include Ni, and one or more elements selected from Co, Mn, and Al.

According to an embodiment, x may be 0<x≤0.01. Here, x refers to substitution molar ratio of Na to Li in the lithium transition metal oxide represented by Formula 1. As a part of Li of the lithium transition metal oxide represented by Formula 1 is substituted by Na, structural stability may be improved. When Li site in a lattice space is substituted by Na, because of intervention of Na which has an ionic radius larger than that of Li, the expansion of the crystal structure due to repulsive force between oxygen atoms in a lithium transition metal oxide when lithium is desorbed in a charging state, is suppressed, and as a result, structural stability of the lithium transition metal oxide is improved even when charging is repeated.

According to an embodiment, a may be 0<α≤0.01. Here, a refers to substitution molar ratio of W to an element M in the lithium transition metal oxide represented by Formula 1. When W is substituted within the range, structural stability of the lithium transition metal oxide is improved. When substitution molar ratio of W exceeds 0.01, a decrease in structural stability due to torsion in the crystal structure is induced, and WO₃ is formed as an impurity, and degradation of electrochemical properties may result.

According to an embodiment, β may be 0<β≤0.005. Here, β refers to substitution molar ratio of Mg to an element M in the lithium transition metal oxide represented by Formula 1. When substitution molar ratio of Mg satisfies the range, structural expansion of the lithium transition metal oxide is suppressed in a charging state.

According to an embodiment, γ may be 0<γ≤0.005. Here, γ refers to substitution molar ratio of Ti to an element M in the lithium transition metal oxide represented by Formula 1. When substitution molar ratio of Ti satisfies the range, structural expansion of the lithium transition metal oxide is suppressed in a charging state.

When W, Mg, and Ti substitute the lithium transition metal oxide in the molar ratio, structural expansion of the crystal due to interaction between oxygen molecules in the lithium transition metal oxide is suppressed even when lithium is desorbed, and thus, structural stability and lifespan characteristics are improved.

According to an embodiment, the sum of α, β, and γ may be 0<α + β + γ ≤0.02. For example, the sum of α, β, and γ may be 0<a + β + γ ≤0.016. When a + β + γ satisfies the range, structural stability of the lithium transition metal oxide is guaranteed. When a + β + γ exceeds 0.02, impurities are formed, which not only may act as a resistance when lithium is desorbed, but also may cause a collapse of the crystal structure when charging is repeated.

According to an embodiment, β and γ may be 0< β ≤0.003, 0<γ ≤0.003, respectively.

For example, in Formula 1, it may be that β = γ. When β = γ, for example, when the molar ratios of Mg and Ti are the same, electric charge in the lithium transition metal oxide is balanced during charge/discharge processes, and collapse of the crystal structure is suppressed, structural stability is improved, and as a result, lifespan characteristics are improved.

According to an embodiment, a may be 0<a≤0.01. Here, a refers to substitution molar ratio of S to an element O in the lithium transition metal oxide represented by Formula 1.

As a part of the oxygen element is substituted by S, the binding force with the transition metal is increased, and the transition of the crystal structure of the lithium transition metal oxide is suppressed, and as a result, the structural stability of the lithium transition metal oxide is improved.

On the other hand, when the substitution molar ratio of S exceeds 0.01, the crystal structure becomes unstable due to repulsive force of the negative S ions, and the lifespan characteristics are even lowered.

According to an embodiment, the lithium transition metal oxide may be a single particle. "Single particle" is a concept distinguished from a secondary particle which is formed by aggregation of a plurality of particles, or a particle in which a plurality of particles are aggregated and the perimeter of the aggregate is coated. When the lithium transition metal oxide has a form of a single particle, the particles may be prevented from being broken even at a high electrode density. Therefore, implementation of a high energy density of the positive active material including the lithium transition metal oxide becomes possible. In addition, with a single particle, breaking of particles may be suppressed during rolling, compared to secondary particles, which is formed by aggregation of a plurality of single particles, and thus, implementation of high-energy density becomes possible and lifespan deterioration due to the breaking of the particles may be prevented.

According to an embodiment, the lithium transition metal oxide may have a single crystal. "Single crystal" is a concept distinguished from "single particle". The term "single particle" refers to a particle formed as one particle, regardless of the type and number of the crystals inside, and the term "single crystal" refers to a particle having only one kind of crystal type inside. Monocrystalline lithium transition metal oxide not only has a very high structural stability, but also allows easier lithium ion conduction than poly-crystal, and has superior fast charging characteristics compared to polycrystalline active materials.

According to an embodiment, the positive active material is a single crystal and a single particle. When the positive active material is formed as a single crystal and a single particle, a structurally stable and high-density electrode may be implemented, and a lithium secondary battery including the same may have an improved lifespan characteristics and a high energy density.

According to an embodiment, the lithium transition metal oxide may be represented by any one of Formulae 2 to 4.

Formula 2 Li_{1-x'}Na_{x'}Ni_{y1'}CO_{y2'}Mn_{y3'}W_{α'}Mgβ_{'}Tiγ_{'}O_{2-a'}S_{a'}

Formula 3 Li_{1-x"}Na_{x"}Ni_{y1"}Co_{y2"}Al_{y3"}W_{α"}Mg_{β"}Tiγ_{"}O_{2-a"}S_{a"}

Formula 4 Li_{1-x‴}Na_{x‴}Niy_{1‴}CO_{y2‴}W_{α‴}Mg_{β‴}Tiγ_{‴}O_{2-a‴}S_{a‴}

According to an embodiment, in Formula 2,
it may be that 0<x'≤0.01, 0<α'≤0.01, 0<β'≤0.005, 0<γ'≤0.005, 0<α'≤0.01, 0<α'+β'+γ'≤0.02, 0.48≤y1'<1, 0<y2' ≤0.2, 0<y3'≤0.3, and y1'+y2'+y3'+ α'+ β'+ γ'=1.

In Formula 3,
it may be that 0<x"≤0.01, 0<α"≤0.01, 0<β"≤0.005, 0<γ"≤0.005, 0<α"≤0.01, 0<α"+β"+γ"≤0.02, 0.73≤y1"<1, 0<y2" ≤0.2, 0<y3"≤0.05, and y1"+y2"+y3"+ α"+ β"+γ"=1.

In Formula 4,
it may be that 0<x‴≤0.01, 0<α‴≤0.01, 0<β‴≤0.005, 0<γ‴<0.005, 0<a‴≤0.01, 0<α‴+β‴+γ‴≤0.02, 0.78≤y1‴<1, 0<y2‴ ≤0.2, and y1‴+y2‴+α‴+β‴+y‴=1.

For example, in Formula 2, it may be that 0<β'≤0.003, 0<γ'≤0.003, and 0<α'+β'+γ'≤0.016, in Formula 3, it may be that, 0<β"≤0.003, 0<γ"≤0.003, 0<α"+β"+γ"≤0.016, and in Formula 4, it may be that 0<β‴≤0.003, 0<γ‴≤0.003, and 0<α‴+β‴+γ‴≤0.016.

The lithium transition metal oxide satisfying the condition may stabilize unstable Ni ions inside, and have high energy density and long life stability.

In case of a general positive active material including high-nickel-based lithium nickel-cobalt-manganese oxide, stabilization of unstable Ni ions is essential, and when W, Mg and Ti substitute a part of the transition metal in the crystal, the positive active material may have an overall balance of electric charges so that oxidation of Ni (II) ions to unstable Ni (III) or Ni (IV) ions may be suppressed, and unstable Ni (III) or Ni (IV) ions may be reduced to Ni (II). On the other hand, the loss of conductivity generated by substitution of a part of the transition metal by W, Mg and Ti, which are heterogeneous elements, is compensated by substituting a part of O by S, and as a part of Li is substituted by Na, reduction of conductivity of Li due to a structural deformation during charge/discharge processes is suppressed, and thus a monocrystalline, structurally stable, high-capacity and long-life positive active material may be obtained.

According to an embodiment, the average diameter (D₅₀) of the lithium transition metal oxide may be 0.1 µm to 20 µm. For example, the average diameter (D₅₀) may be 0.1 µm to 15 µm, 0.1 µm to 10 µm, 1 µm to 20 µm, 5 µm to 20 µm, 1 µm to 15 µm, 1 µm to 10 µm, 5 µm to 15 µm, or 5 µm to 10 µm. When the average diameter of the lithium transition metal oxide is within the range, a desirable energy density per volume may be implemented. When the average diameter of the lithium transition metal oxide exceeds 20 µm, charge/discharge capacity may plunge, and when the average diameter of the lithium transition metal oxide is less than 0.1 µm, a desirable energy density per volume may be difficult to obtain.

According to an embodiment, the lithium transition metal oxide may further include a coating layer including a phosphorous-containing compound on the surface.

For example, the phosphorus-containing compound may be crystalline, amorphous, or a combination thereof. For example, the phosphorus-containing compound may include a crystalline Li₃PO₄, or an amorphous phosphorous-containing compound including lithium, phosphorus and an oxygen atom.

According to an embodiment, the molar ratio of phosphorous (P) elements in the positive active material may be 0.2 mol% or less with respect to all the elements included in the positive active material.

According to an embodiment, the phosphorus-containing compound may include a compound represented by Formula 5:

Formula 5 LiaPbOc,

wherein 0<a≤3, 0<b≤1, and 0<c≤4.

For example, in Formula 3, b may be 0<b≤0.02.

According to an embodiment, the coating layer may be arranged to cover at least a portion of the lithium transition metal oxide. For example, the coating layer may completely cover the surface of the lithium transition metal oxide.

According to an embodiment, the positive active material may have a peak at 2θ = 20° to 25° in an X-ray diffraction spectrum obtained by an XRD analysis using CuKa radiation.

In the XRD graph, a peak at 2θ = 20° to 25° means presence of Li₃O₄.

Hereinafter, a method of preparing a positive active material according to an aspect will be described in detail.

A method of preparing a positive active material according to an embodiment includes, obtaining a precursor of lithium transition metal oxide by mixing a Li-containing compound, a Na-containing compound, a W-containing compound, a Mg-containing compound, a Ti-containing compound, an M-containing compound, and an S-containing compound, and heat-treating the precursor to obtain a positive active material including a lithium transition metal oxide represented by Formula 1:

Formula 1 Li₁₋ₓNaₓM_{1-(α+β+γ)}W_{α}Mg_{β}Ti_{γ}O₂₋ₐSₐ,

wherein in Formula 1,
M includes one or more elements selected from alkali metal elements, alkali earth metal elements, transition metal elements, post-transition metal elements, and non-metallic elements, other than W, Mg, Ti, Na, and S
0<x≤0.01, 0<α≤0.01, 0<β≤0.005, 0<γ≤0.005, 0<a≤0.01, and 0<α+β+γ≤0.02.

For a specific description of Formula 1, refer to the description above.

The mixing includes mechanically mixing the compounds containing specific elements. The mechanical mixing may be performed as a dry process. The mechanical mixing is forming a uniform mixture by pulverizing and mixing the materials to be mixed by applying a mechanical force. The mechanical mixing may be performed by, for example, using a mixing device such as a ball mill, which uses chemically inert beads, a planetary mill, a stirred ball mill, or a vibrating mill. In this regard, in order to maximize the mixing effect, alcohols such as ethanol, and higher fatty acids such as stearic acid may be selectively added in small quantities.

The mechanical mixing may be carried out in an oxidizing atmosphere, so as to prevent the reduction of the transition metal in the transition metal source (for example, Ni compound), and to implement structural stability of the active material.

The lithium-containing compound may include, but is not limited to, lithium hydroxide, oxide, nitride, carbonate, or a combination thereof. For example, the lithium precursor may be LiOH or Li₂CO₃.

The Na-containing compound may include, but is not limited to, hydroxide, oxide, nitride, carbonate of Na, or a combination thereof. For example, the Na-containing compound may be NaOH, Na₂CO₃, or a combination thereof.

The W-containing compound may include, but is not limited to, hydroxide, oxide, nitride, carbonate of W, or a combination thereof. For example, the W-containing compound may be W(OH)₆, WO₃, or a combination thereof.

The Mg-containing compound may include, but is not limited to, hydroxide, oxide, nitride, carbonate of Mg, or a combination thereof. For example, the Mg-containing compound may be Mg(OH)₂, MgCO₃, or a combination thereof.

The Ti-containing compound may include, but is not limited to, hydroxide, oxide, nitride, carbonate of Ti, or a combination thereof. For example, the Ti-containing compound may be Ti(OH)₂, TiO₂, or a combination thereof.

The M-containing compound may include hydroxide, oxide, nitride, carbonate, or a combination thereof of at least one or more elements selected from alkali metal elements, alkali earth metal elements, metalloid elements, and non-metallic elements, other than W, Mg, Ti, Na, and S. For example, the M-containing compound may be Ni_{0.8}Co_{0.1}Mn_{0.1}(OH)₂, Ni_{0.9}CO_{0.05}Al_{0.05}(OH)₂, or Ni_{0.9}Co_{0.1}(OH)₂.

The S-containing compound may include, but is not limited to, hydroxide, oxide, nitride, carbonate, ammonium of S, or a combination thereof. For example, the S-containing compound may be (NH₄)₂S.

According to an embodiment, the process of obtaining a lithium transition metal oxide precursor may further include a phosphorus-containing compound as a material for mixing.

The precursor of the phosphorus-containing compound includes all phosphorus-containing compounds that can provide P element. For example, the phosphorous precursor may be (NH₄)₂HPO₄.

After the mixing, heat-treating may be further included. The heat-treating may include a first heat treatment, and a second heat treatment. The first heat treatment and the second heat treatment may be performed continuously, or there may be a break time after the first heat treatment. In addition, the first heat treatment and the second heat treatment may be performed in the same chamber, or may be performed in different chambers.

The heat treatment temperature in the first heat treatment may be higher than the heat treatment temperature in the second heat treatment.

The first heat treatment may be performed at a heat treatment temperature of 800 °C to 1200 °C. The heat treatment temperature may be, for example, 850 °C to 1200 °C, 860 °C to 1200 °C, 870 °C to 1200 °C, 880 °C to 1200 °C, 890 °C to 1200 °C, or 900 °C to 1200 °C, but is not limited thereto, and includes all ranges derived by selecting any two points in the above range.

The second heat treatment may be performed at a heat treatment temperature of 700 °C to 800 °C. The heat treatment temperature may be, 710 °C to 800 °C, 720 °C to 800 °C, 730 °C to 800 °C, 740 °C to 800 °C, 750 °C to 800 °C, or 700 °C to 780 °C, 700 °C to 760 °C, 700 °C to 750 °C, or 700 °C to 730 °C, but is not limited thereto, and includes all ranges derived by selecting any two points in the above range.

According to an embodiment, the heat treatment time in the first heat treatment may be shorter than the heat treatment time in the second heat treatment.

For example, in the first heat treatment, the heat treatment time may be 3 hours to 5 hours, 4 hours to 5 hours, or 3 hours to 4 hours, but is not limited thereto, and includes all ranges derived by selecting any two points in the above range.

For example, in the second heat treatment, the heat treatment time may be 10 hours to 20 hours, or 10 hours to 15 hours, but is not limited thereto, and includes all ranges derived by selecting any two points in the above range.

The first heat treatment may include heat treating for 3 hours to 5 hours at a heat treatment temperature of 800 °C to 1200 °C.

The second heat treatment may include heat treating for 10 hours to 20 hours at a heat treatment temperature of 700 °C to 800 °C.

In the first heat treatment, lithium transition metal oxide forms a positive active material of a layered structure, and growth of the particles is induced, so that a single crystal is formed. In the first heat treatment, it is thought that each of the first particles in forms of secondary particles in the lithium transition metal oxide is rapidly grown, and as the stress between the particles is not tolerated, the inside of the first particles is exposed, and the first particles are fused, so that a single crystal positive active material for a secondary battery is formed. The second heat treatment performs heat treatment at a temperature lower than in the first heat treatment for a long time, so as to increase crystallinity of the layered structure generated in the first heat treatment. Through the first and second heat treatments, a single-phase, single crystal, single particle high-nickel-based positive active material may be obtained.

According to an embodiment, the lithium transition metal oxide prepared by the manufacturing method is a single crystal and a single particle, and the single crystal may have a layered structure. Furthermore, the average particle diameter of the lithium transition metal oxide may be 0.1 µm to 20 µm.

In addition, in the lithium transition metal oxide prepared by the method of manufacturing a positive active material, M is substituted by W, Mg, and Ti, O is substituted by S, and Li is substituted by Na, so that oxidation of existing Ni²⁺ is suppressed, and reduction of unstable Ni³⁺ ions to Ni²⁺ ions is induced, and a lithium transition metal oxide having a structural stability and high density is obtained. Furthermore, the reduced Ni²⁺ ions and Li⁺ ions have similar ion radii, so that Li/Ni disordering is promoted, and Ni ions fill the empty lattice when Li is desorbed, and a structural stability of the crystal is promoted.

According to another aspect, a positive electrode including the aforementioned positive active material is provided.

According to still another aspect, a lithium secondary battery including the positive electrode; negative electrode; and electrolyte, is provided.

The lithium secondary battery may have capacity retention rate of 90 % or more after 100 charge/discharge cycles of by including a positive active material including the above-described lithium transition metal oxide.

The positive electrode and a lithium secondary battery including the same may be prepared in the following manner.

First, a positive electrode is prepared.

For example, a positive active material composition is prepared wherein the above-described positive active material, a conductive material, a binder, and a solvent are mixed. The positive active material composition is directly coated on the metal current collector to prepare a positive electrode plate. Alternatively, the positive active material composition may be casted on a separate support, and then a film peeled off from the support may be laminated on the metal current collector to prepare a positive electrode plate. The positive electrode is not limited to a form listed above, and may be in a form other than the above forms.

For the conductive material, graphite such as natural graphite or artificial graphite; carbon black; conductive tubes such as carbon nanotubes; conductive whisker such as fluorocarbon, zinc oxide, potassium titanate; conductive metal oxides such as titanium oxide; may be used, but it is not limited thereto, and all that may be used as a conductive material in the related art may be used.

For the binder, vinylidene fluoride/hexafluoropropylene copolymer, polyvinylidene fluoride (PVDF), polyacrylonitrile, polymethyl methacrylate, a polytetrafluoroethylene, a mixture thereof, a metal salt, or a styrene butadiene rubber-based polymers may be used, but it is not limited thereto, all that may be used as a binder in the related art may be used. For other examples of a binder, lithium salts, sodium salts, or calcium salts of the above-described polymers may be used.

For the solvent, N-methylpyrrolidone, acetone or water may be used, but it is not limited thereto, all that may be used in the related art may be used.

The content of the positive active material, conductive material, binder, and solvent is a level typically used in a lithium battery. Depending on the use and configuration of the lithium battery, one or more of the conductive material, binder, and solvent may be omitted.

Next, a negative electrode is prepared.

For example, a negative active material composition is prepared by mixing a negative active material, a conductive material, a binder, and a solvent. The negative active material is directly coated on a metal current collector which has a thickness of 3 µm to 500 µm, and is dried to prepare a negative electrode plate. Alternatively, the negative active material composition may be casted on a separate support, and then a film peeled off from the support may be laminated on the metal current collector to prepare a negative electrode plate.

The negative electrode current collector is not particularly limited as long as the negative electrode current collector does not cause a chemical change in the battery and has conductivity, and for example, copper, nickel, and copper treated with carbon on the surface may be used.

For the negative active material, any that may be used as a negative active material in the related art may be used. For example, the negative active material may include one or more selected from lithium metals, metals alloyable with lithium, transition metal oxides, non-transition metal oxides, and carbon-based materials.

For example, the metals alloyable with lithium may be Si, Sn, Al, Ge, Pb, Bi, Sb, and Si-Y alloy (Y may be an alkali metal, alkaline earth metal, group 13 element, group 14 element, transition metal, rare earth element, or a combination thereof, and is not Si), Sn-Y alloy (Y may be an alkali metal, alkaline earth metal, group 13 element, group 14 element, transition metal, rare earth element, or a combination thereof, and is not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

For example, the transition metal oxide may be lithium titanium oxide, vanadium oxide, lithium vanadium oxide, and the like.

For example, the non-transition metal oxide may be SnO₂, SiOₓ (0< x <2), and the like.

The carbon-based material may be crystalline carbon, amorphous carbon or a mixture thereof. The crystalline carbon may be amorphous, plate-like, flake-like, spherical or fibrous graphite such as natural graphite or artificial graphite, and the amorphous carbon may be soft carbon (carbon calcined at a low-temperature) or hard carbon, a mesophase pitch carbide, a calcined coke, and the like.

In the negative active material composition, for a conductive material, binder, and solvent, the same may be used as in the case of the positive active material composition.

The content of the negative active material, conductive material, binder, and solvent is a level typically used in a lithium battery. Depending on the use and configuration of the lithium battery, one or more of the conductive material, binder, and solvent may be omitted.

Next, a separator to be inserted between the positive electrode and the negative electrode is prepared.

For the separator, all that are used in a lithium battery in the art may be used. A separator having a low resistance to the ionic movement of the electrolyte, and having an excellent impregnation ability of electrolyte solution may be used. The separator may be a single film or a multi-layer film, for example, is selected from glass fiber, polyester, teflon, polyethylene, polypropylene, polyvinylidene fluoride, polytetrafluoroethylene (PTFE) or combination thereof, and may be in a form of a nonwoven fabric or a woven fabric. In addition, a mixed multilayer film such as a polyethylene/polypropylene 2-layer separator, polyethylene/polypropylene/polyethylene 3-layer separator, polypropylene/polyethylene/ polypropylene 3-layer separator may be used. For example, a winding separator such as polyethylene, polypropylene, and the like may be used in a lithium ion cell, and a separator having an excellent impregnation ability of a electrolyte solution may be used in a lithium ion polymer cell. For example, the separator may be prepared according to the following method.

A separator composition is prepared by mixing a polymer resin, a filler and a solvent. The separator composition is directly coated on the electrode and dried to form a separator. Alternatively, after the separator composition is casted and dried on a support, a separator film may be peeled off from the support and laminated on the electrode to form a separator.

The polymer resin used in the production of the separator is not particularly limited, and all materials used as a binder of the electrode plate may be used. For example, vinylidene fluoride/hexafluoropropylene copolymer, polyvinylidene fluoride (PVDF), polyacrylonitrile, polymethyl methacrylate, or a mixture thereof, may be used.

Next, an electrolyte is prepared.

For example, the electrolyte may be an organic electrolyte solution. In addition, the electrolyte may be a solid. For example, the electrolyte may be boron oxide, lithium oxynitride, and the like, but is not limited thereto, and all that may be used as a solid electrolyte in the related art may be used. The solid electrolyte may be formed on the negative electrode by using a method such as sputtering.

For example, the organic electrolyte solution may be prepared by dissolving lithium salt in an organic solvent.

For the organic solvent, all that may be used as an organic solvent in the art may be used. For example, the organic solvent may be cyclic carbonate such as propylene carbonate, ethylene carbonate, fluoroethylene carbonate, butylene carbonate, vinylene carbonate, etc.; chain-like carbonate such as dimethylcarbonate, diethyl carbonate, methyl ethyl carbonate, methylpropylcarbonate, ethyl propylcarbonate, methyl isopropylcarbonate, dipropylcarbonate, dibutylcarbonate, etc.; ethers such as methyl acetate, ethyl acetate, propyl acetate, methyl propionate, ethyl propionate, γ-butyrolactone, etc.; nitriles such as acetonitrile; amides such as dimethylformamide, etc. They can be used alone or in combination of many. For example, a solvent in which cyclic carbonate and chain-like carbonate are mixed may be used.

In addition, a gel polymer electrolyte in which a polymer electrolyte such as polyethylene oxide or polyacrylonitrile is impregnated with an electrolyte solution, or an inorganic solid electrolyte such as Lil, Li₃N, LiₓGe_{y}P_{z}S_{α}, and LiₓGe_{y}P_{z}SαX_{δ} (X=F, Cl, Br) may be used.

For the lithium salts, all that may be used as lithium salts in the art may be used. For example, the lithium salts may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(x and y are natural numbers), LiCI, Lil, or a combination thereof.

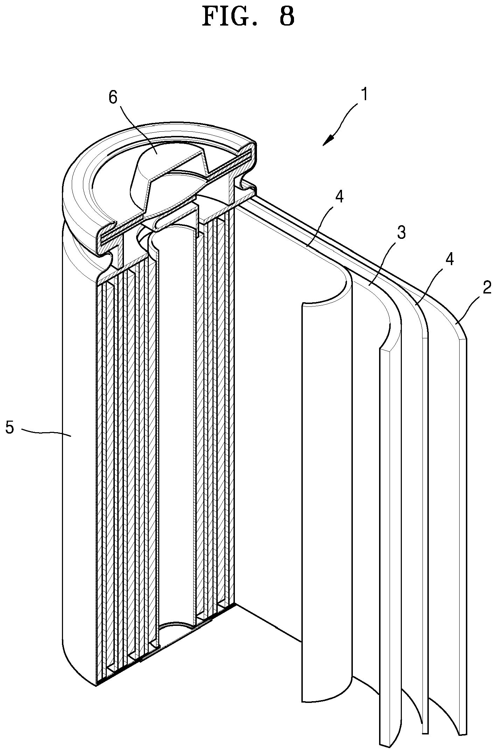

As shown in FIG. 8, the lithium battery 1 includes a positive electrode 3, a negative electrode 2, and a separator 4. The above-described positive electrode 3, negative electrode 2, and separator 4 are winded or folded to be accommodated in the battery case 5. Next, an organic electrolyte solution is injected into the battery case 5, the battery case 5 is sealed with a cap assembly 6, and a lithium battery is completed. The battery case 5 may be a cylindrical type, a square type, a pouch type, a coin type, a thin film type, etc. For example, the lithium battery 1 may be a thin film type battery. The lithium battery 1 may be a lithium ion battery.

A separator may be arranged between the positive electrode and the negative electrode to form a battery structure. When the battery structure is laminated in a bicellular structure, impregnated with an organic electrolyte, and accommodated in a pouch and sealed, a lithium ion polymer battery is completed.

In addition, a plurality of the battery structures may be laminated to form a battery pack, and such a battery pack may be used for all devices that require high capacity and high power. For example, the battery pack may be used in a laptop, smartphone, electric vehicle, and the like.

Furthermore, since the lithium battery is excellent in lifespan characteristics and high rate characteristics, the lithium battery may be used in electrical vehicles (EV). For example, the lithium battery may be used in a hybrid vehicle such as plug-in hybrid electric vehicle (PHEV). Furthermore, the lithium battery may be used in a field in which a large amount of power storage is required. For example, the lithium battery may be used in an electric bicycle, a power tool, a power storage system, and the like.

The present disclosure is described in more detail with reference to the following manufacturing examples, examples, and comparative examples. However, the examples are intended to illustrate the present disclosure, and the scope of the present disclosure is not limited by the examples.

### (Preparation of positive active material)

### Example 1

100g of Ni_{0.8}Co_{0.1}Mn_{0.1}(OH)₂, 41.8 g of Li₂CO₃, 0.67 g of B(OH)₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was calcined at 1,000 °C for 4 hours and at 700 °C for 10 hours to obtain a positive active material.

### Example 2

100 g of Ni_{0.90}Co_{0.05}Al_{0.05}(OH)₂, 42.4 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was calcined at 970 °C for 4 hours and at 700 °C for 10 hours to obtain a positive active material.

### Example 3

100 g of Ni_{0.9}Co_{0.1}(OH)₂, 42.0 g of Li₂CO₃, 3.0 g of WO₃, 0.27 g of MgCO₃, 0.24 g of TiO₂, 0.45 g of NaOH and 0.75 g of (NH₄)₂S were mechanically mixed for about 15 minutes. The mixed powder was calcined at 970 °C for 4 hours and at 700 °C for 10 hours to obtain a positive active material.

### Example 4

100 g of Ni_{0.9}Co_{0.1}(OH)₂, 42.0 g of Li₂CO₃, 3.0 g of WO₃, 0.27 g of MgCO₃, 0.24 g of TiO₂, 0.45 g of NaOH, 0.75 g of (NH₄)₂S and 0.30 g of (NH₄)₂HPO₄ were mechanically mixed for about 15 minutes. The mixed powder was calcined at 1,000 °C for 4 hours and at 700 °C for 10 hours to obtain a positive active material.

### Comparative Example 1

100 g of Ni_{0.8}Co_{0.1}Mn_{0.1}(OH)₂ and 41.8 g of Li₂CO₃ were mechanically mixed for about 15 minutes. The mixed powder was calcined at 1,000 °C for 4 hours and at 700 °C for 10 hours to obtain a positive active material.

### Comparative Example 2

100 g of Ni_{0.8}Co_{0.1}Mn_{0.1}(OH)₂, 41.8 g of Li₂CO₃, 0.27 g of MgCO₃, and 0.24 g of TiO₂ were mechanically mixed for about 15 minutes. The mixed powder was calcined at 1,000 °C for 4 hours and at 700 °C for 10 hours to obtain a positive active material.

### Comparative Example 3

100 g of Ni_{0.8}Co_{0.1}Mn_{0.1}(OH)₂, 41.8 g of Li₂CO₃, 0.27 g of MgCO₃, and 0.45 g NaOH were mechanically mixed for about 15 minutes. The mixed powder was calcined at 1,000 °C for 4 hours and at 700 °C for 10 hours to obtain a positive active material.

### Comparative Example 4

100 g of Ni_{0.8}Co_{0.1}Mn_{0.1}(OH)₂, 41.8 g of Li₂CO₃, 3.0 g of WO₃, and 0.27 g of MgCO₃ were mechanically mixed for about 15 minutes. The mixed powder was calcined at 1,000 °C for 4 hours and at 700 °C for 10 hours to obtain a positive active material.

### Comparative Example 5

100 g of Ni_{0.8}Co_{0.1}Mn_{0.1}(OH)₂, 41.8 g of Li₂CO₃ and 0.75 g of (NH₄)₂S were mechanically mixed for about 15 minutes. The mixed powder was calcined at 1,000 °C for 4 hours and at 700 °C for 10 hours to obtain a positive active material.

### Comparative Example 6

100 g of Ni_{0.90}Co_{0.05}Al_{0.05}(OH)₂ and 42.4 g of Li₂CO₃ were mechanically mixed for about 15 minutes. The mixed powder was calcined at 970 °C for 4 hours and at 700 °C for 10 hours to obtain a positive active material.

### Comparative Example 7

100 g of Ni_{0.9}Co_{0.1}(OH)₂ and 42.0 g of Li₂CO₃ were mechanically mixed for about 15 minutes. The mixed powder was calcined at 970 °C for 4 hours and at 700 °C for 10 hours to obtain a positive active material.

### (Preparation of half-cells)

### Example 5

The positive active material obtained in Example 1: conductive material: binder were mixed at a weight ratio of 94: 3: 3 to prepare slurry. Here, carbon black was used as the conductive material, polyvinylidene fluoride (PVDF) dissolved in N-methyl-2-pyrrolidone solvent was used as a binder.

The slurry was uniformly applied on the AI current collector, dried at 110 °C for 2 hours to prepare a positive electrode. The loading level on the electrode plate was 11.0 mg/cm², and the electrode density was 3.6 g/cc.

The prepared positive electrode was used as a working electrode, and the lithium foil was used as the counter electrode, and CR2032 half-cell was prepared according to a process known in the art by using a liquid electrolyte solution, in which LiPF₆ as a lithium salt was added to a mixed solvent where EC/EMC/DEC were mixed at a volume ratio of 3/4/3 so that the molar concentration of LiPF₆ is 1.3 M.

### Examples 6 to 8

Half-cells were prepared in the same manner as in Example 5, except that the positive active materials obtained in Examples 2 to 4 were used instead of the positive active material obtained in Example 1.

### Comparative Examples 8 to 14

Half-cells were prepared in the same manner as in Example 5, except that the positive active materials obtained in Comparative Examples 1 to 7 were used instead of the positive active material obtained in Example 1.

### Evaluation Example 1: Evaluation of composition of positive active material

Inductively coupled plasma (ICP) analysis was carried out on positive active materials synthesized in Examples 1 to 4, and Comparative Example 1 by using a 700-ES (Varian) equipment, and the results are shown in Table 1 below.

Referring to Table 1, in case of a positive active material of Example 1, the number of moles of Li is reduced because Li is substituted by 0.01 mol of Na, but the sum of the number of moles of Na and Li are stoichiometrically 1. In addition, as the transition metal is substituted by 0.01 mol of W and 0.003 mol of Mg and Ti, the number of moles of Ni, Co, or Mn are reduced, but their total stoichiometric value is 1. In addition, as O is substituted by 0.01 mol of S in the structure, the number of moles of O is reduced, but the total stoichiometric value is 1.

The positive active material of Example 4 includes 0.2 mol% of P, and stoichiometric value of the transition metal or Li is not affected thereby. This suggests that the coating layer contains P element.

**[Table 1]**

| (mol%) | Li | Na | Ni | Co | Mn | W | Mg | Ti | S | P |
|---|---|---|---|---|---|---|---|---|---|---|
| Comparative Example 1 | 100 | - | 79.7 | 10.5 | 9.8 | - | - | - | - | - |
| Example 1 | 99 | 1 | 79.0 | 10.1 | 9.3 | 1 | 0.3 | 0.3 | 0.1 | - |
| Example 4 | 99 | 1 | 79.0 | 10.1 | 9.3 | 1 | 0.3 | 0.3 | 0.1 | 0.2 |

### Evaluation Example 2: Evaluation of particle size of positive active material

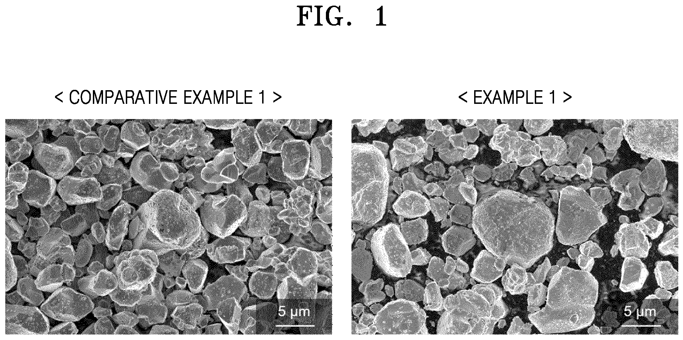

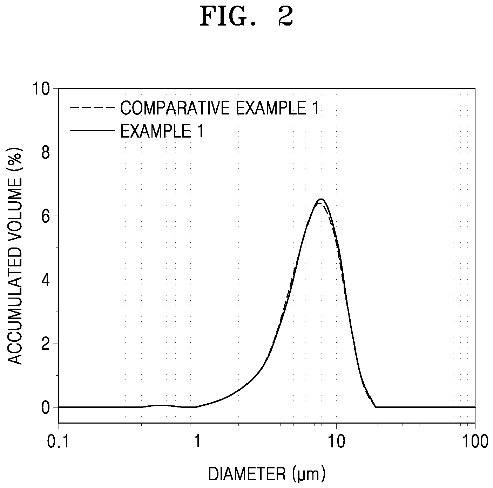

Scanning electron microscope (SEM) images of positive active materials synthesized in Example 1 and Comparative Example 1 were obtained by using FEI's Verios 460 device and were shown in FIG. 1. Particle sizes were measured by using Scinco's Cilas 1090 device and were shown in Table 2 and FIG. 2.

Referring to Table 2 and FIGS. 1 to 2, various elements were added to the positive active material of Example 1, but difference in the surfaces of the single particle positive active materials was not observed, and there was no difference in average particle diameter, either. This suggests that substitutions of elements were made without a change or transition of the crystal structure.

**[Table 2]**

| | D₁₀(*µ*m) | D₅₀(*µ*m) | D₉₀(*µ*m) |
|---|---|---|---|
| Comparative Example 1 | 3.3 | 6.7 | 11.2 |
| Example 1 | 3.1 | 6.6 | 10.7 |

### Evaluation Example 3: Evaluation of lifespan at room temperature

Half-cells prepared in Examples 5 to 8 and Comparative Examples 8 to 14 were rested for 10 hours, charged at a constant current (CC) mode at 0.1 C so the voltage reached 4.3 V, and then charged at a constant voltage (CV) mode so the current reached 0.05 C. Next, the half-cells were discharged at CC mode at 0.1 C so the voltage reached 3.0 V, and the formation process was completed.

Next, the half-cells were charged at CC mode at 0.5 C so the voltage reached 4.3 V at room temperature (25 °C), and then were charged at CV mode so the current reached 0.05 C. Next, the half-cells were discharged at CC mode at 1 C so the voltage reached 3.0 V, and the process was repeated 100 times.

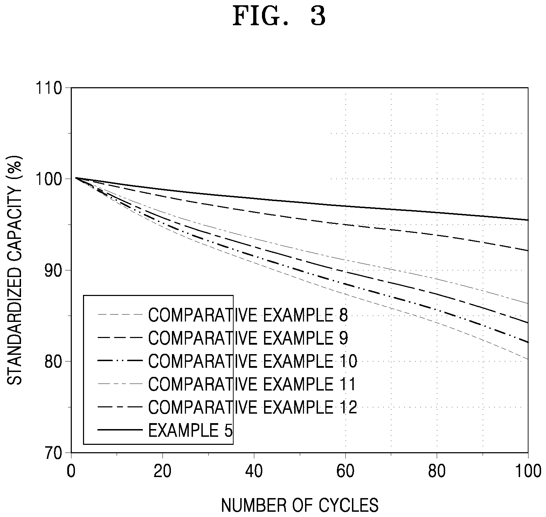

Capacity retention rate was calculated with respect to the initial capacity after charging and discharging for 100 times, and the results are shown in Table 3 below. Furthermore, graphs showing capacity retention rates according to the cycle are shown in FIGS. 3 to 6.

**[Table 3]**

| Positive active material/half-cell | Positive active material composition | Lifespan retention rate after 100 cycles (%) |
|---|---|---|
| Comparative Example 1/ Comparative Example 8 | LiNi_{0.8}Co_{0.1}Mn_{0.1}O₂ | 80.5 |
| Comparative Example 2/ Comparative Example 9 | LiMg_{0.003}Ti_{0.003}Ni_{0.797}Co_{0.098}Mn_{0.0}99O₂ | 92.2 |
| Comparative Example 3/ Comparative Example 10 | Li_{0.99}Na_{0.01}Mg_{0.003}Ni_{0.798}Co_{0.099}Mn_{0.1}O₂ | 82.2 |
| Comparative Example 4/ Comparative Example 11 | LiW_{0.01}Mg_{0.003}Ni_{0.790}Co_{0.098}Mn_{0.099}O₂ | 86.3 |
| Comparative Example 5/ Comparative Example 12 | LiNi_{0.8}Co_{0.1}Mn_{0.1}O_{1.99}S_{0.01} | 84.4 |
| Example 1/Example 5 | Li_{0.99}Na_{0.01}W_{0.01}Mg_{0.003}Ti_{0.003}Ni_{0.79}Co_{0.101}Mn_{0.093} O_{1.99}S_{0.01} | 95.3 |
| Comparative Example 6/ Comparative Example 13 | LiNi_{0.90}Co_{0.05}Al_{0.05}O₂ | 68.8 |
| Example 2/Example 6 | Li_{0.99}Na_{0.01}W_{0.01}Mg_{0.003}Ti_{0.003}Ni_{0.89}Co_{0.047}Al_{0.047}O _{1.99}S_{0.01} | 91.3 |
| Comparative Example 7/ Comparative Example 14 | LiNi_{0.90}Co_{0.10}O₂ | 72.2 |
| Example 3/Example 7 | Li_{0.99}Na_{0.01}W_{0.01}Mg_{0.003}Ti_{0.003}Ni_{0.89}Co_{0.094}O_{1.99}S₀. 01 | 90.1 |
| Example 4/Example 8 | LiₓPO_{y}-Li_{0.99}Na_{0.01}W_{0.01}Mg_{0.003}Ti_{0.003}Ni_{0.79}CO_{0.101}Mn_{0.093} O_{1.99}S_{0.01} | 96.7 |

Referring to Table 3 and FIG. 3, and according to the lifespan evaluation results of Example 5 and Comparative Example 8 at room temperature, Example 5 including a positive active material in which Na, W, Mg, Ti and S are introduced shows a lifespan retention rate about 15 % higher than that of Comparative Example 8 including a positive active material not including the elements. In addition, it may be seen that Example 5 has a lifespan retention rate at room temperature about 3 % to 15 % higher than that of monocrystalline NCM811 including Mg and Ti (Comparative Example 9), monocrystalline NCM811 including Na and Mg (Comparative Example 10), monocrystalline NCM811 including Wand Mg (Comparative Example 11), and monocrystalline NCM811 including S (Comparative Example 12). These results are thought to be caused by suppressive effect of transition of the crystal structure as Na is introduced, enhanced structural stability by ordering of Ni ions in the structure as W, Mg, and Ti elements are introduced, and suppression of oxygen release in the structure and suppression of side reactions with the electrolyte solution when electrochemically evaluated due to increase of the binding force between the transition metal and oxygen. Furthermore, S element substituting oxygen has a higher electronegativity than oxygen, and thus binding force between the transition metal and the oxygen may be increased, and at the same time, conductivity of the active material may be enhanced. Accordingly, the introduction of five additional elements is shown not only to provide structural stability of the positive active material, but also to improve conductivity of the active material, and thus, lifespan is more improved with the introduction of five additional elements than with an introduction of an individual additional element.

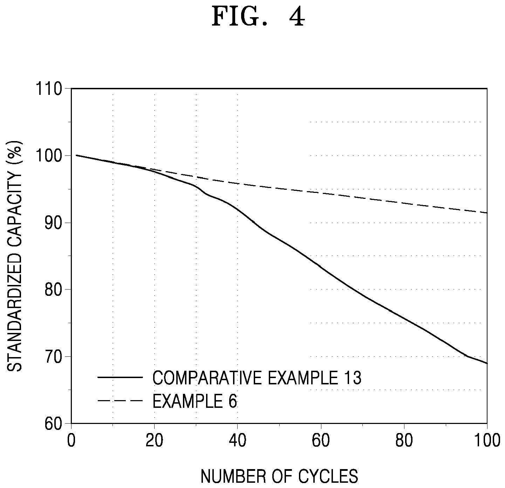

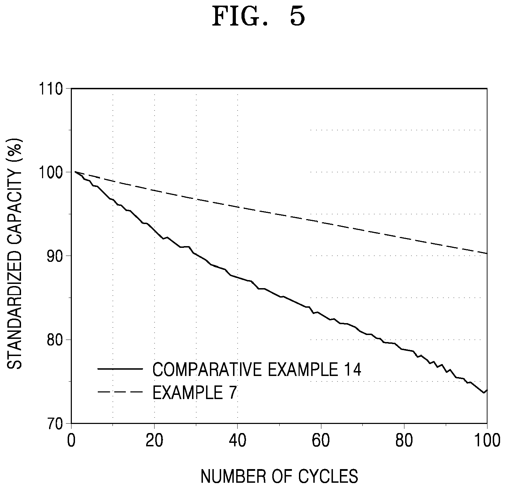

Furthermore, referring to FIGS. 4 and 5, it was confirmed by experiments that introduction of elements Na, W, Mg, Ti, and S increases lifespan characteristics at room temperature about 18 % to about 25 %, not only in case of nickel-cobalt-manganese (NCM)-based positive active material, but also in cases of nickel-cobalt-aluminum (NCA)-based positive active material, and nickel-cobalt (NC)-based positive active material.

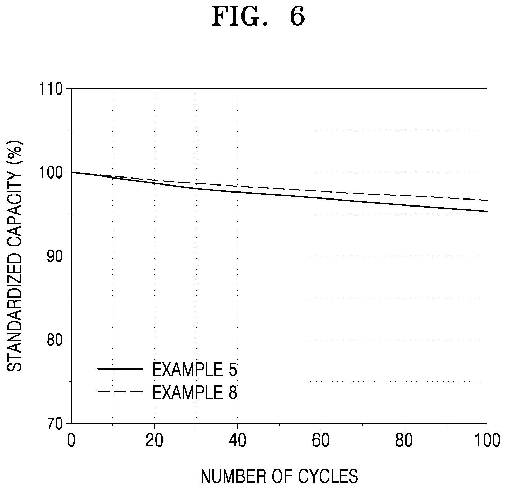

In addition, referring to FIG. 6, when phosphorous-containing coating layer is included, lifespan retention rate after 100 cycles was found to be improved by 1.4 %. This is thought to be caused by reduction of residual lithium by inclusion of phosphorous-containing coating layer.

### Evaluation Example 4: Identification of the phosphorous-containing coating layer

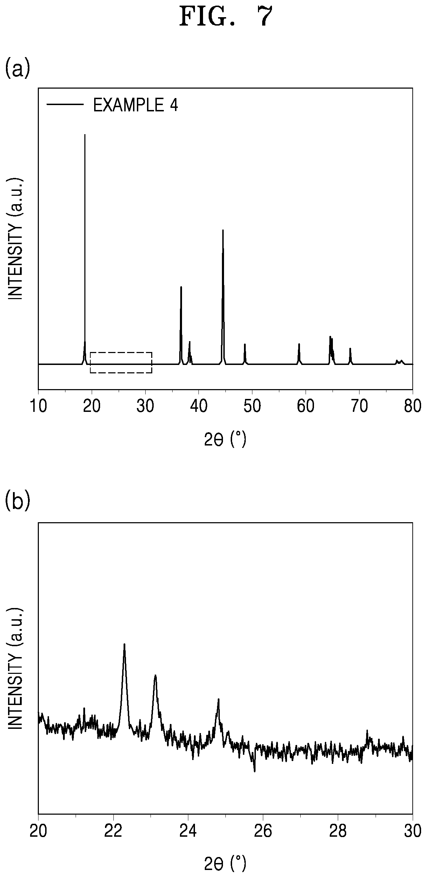

An X-ray diffraction spectrum graph of the positive active material synthesized in Example 4 was obtained by using Rigaku's D/MAX 2500 V/PC device in a range of 2θ = 10° to 80°, and the results are shown in FIG. 7.

Referring to FIGS. 7A and 7B, the positive active material of Example 4 shows a peak in the range of 2θ = 20° to 25° which corresponds to Li₃PO₄ Therefore, it is thought that P element exists as Li₃PO₄ in the coating layer by reacting with residual lithium compound present on the surface of Ni-based positive active material. Without being constrained to a theory, the coating layer is thought to include an amorphous phosphorous-containing compound including Li, P and O, which is not observed by XRD.

So far, preferred embodiments according to the present disclosure have been described with reference to the drawings and examples, but they are merely given as examples, and those with an average knowledge in the art will understand that various modifications and equivalent other embodiments are possible. Accordingly, the scope of the present disclosure should be determined by the appended claims.

## Claims

1. A positive active material comprising:
a lithium transition metal oxide represented by Formula 1:
Formula 1 Li₁₋ₓNaₓM_{1-(α+β+γ)}W_{α}Mg_{β}Ti_{γ}O₂₋ₐSₐ,
wherein in Formula 1,
M includes one or more elements selected from alkali metal elements, alkali earth metal elements, transition metal elements, post-transition metals, and non-metallic elements, other than W, Mg, Ti, Na, and S
0<x≤0.01, 0<α≤0.01, 0<β≤0.005, 0<γ≤0.005, 0<a≤0.01, and 0<α+β+γ≤0.02.

2. The positive active material of claim 1, wherein β and γ are 0<β≤0.003, and 0<γ≤0.003, respectively.

3. The positive active material of claim 1, wherein, in Formula 1, β=γ.

4. The positive active material of claim 1, wherein M includes one or more elements selected from Ni, Co, Mn, Al, V, Ca, Zr, B, and P.

5. The positive active material of claim 4, wherein M includes Ni and one or more elements selected from Co, Mn, and Al.

6. The positive active material of claim 1, wherein the lithium transition metal oxide is a single particle.

7. The positive active material of claim 1, wherein the lithium transition metal oxide is a single crystal.

8. The positive active material of claim 1, wherein the lithium transition metal oxide is represented by any one of Formulae 2 to 4:
Formula 2 Li_{1-x'}Na_{x'}Ni_{y1}Co_{y2'}Mn_{y3'}W_{α'}Mg_{β'}Ti_{γ'}O_{2-a'}S_{a'}
Formula 3 Li_{1-x"}Na_{x"}Ni_{y1"}Co_{y2"}Al_{y3"}W_{α"}Mg_{β"}Ti_{γ"}O_{2-a"}S_{a"}
Formula 4 Li_{1-x‴}Na_{x‴}Niy_{1‴}Co_{y2‴}W_{α‴}Mg_{β‴}Ti_{γ‴}O_{2-a‴}S_{a‴},
wherein in Formula 2,
0<x'≤0.01, 0<α'≤0.01, 0<β'≤0.005, 0<γ'≤0.005, 0<α'≤0.01, 0<α'+β'+γ'≤0.02, 0.48≤y1'<1, 0<y2' ≤0.2, 0<y3'≤0.3, and y1'+y2'+y3'+ a'+ β'+γ'=1,
in Formula 3,
0<x"≤0.01, 0<α"≤0.01, 0<β"≤0.005, 0<y"≤0.005, 0<α"≤0.01, 0<α"+β"+γ"≤0.02, 0.73≤y1"<1, 0<y2" ≤0.2, 0<y3"≤0.05, and y1"+y2"+y3"+ a"+ β"+γ"=1,
and in Formula 4,
0<x‴≤0.01, 0<α‴≤0.01, 0<β‴≤0.005, 0<γ‴≤0.005, 0<a‴≤0.01, 0<α‴+β‴+γ‴≤0.02, 0.78≤y1‴<1, 0<y2‴ ≤0.2, and y1‴+y2‴+α‴+β‴+y‴=1.

9. The positive active material of claim 8, wherein
in Formula 2, 0<β'≤0.003, 0<γ'≤0.003, and 0<α'+β'+γ'≤0.016,
in Formula 3, 0<β"≤0.003, 0<γ"≤0.003, and 0<α"+β"+γ"≤0.016, and
in Formula 4, 0<β‴≤0.003, 0<γ‴≤0.003, and 0<α‴+β‴+γ‴≤0.016.

10. The positive active material of claim 1, wherein an average diameter (D₅₀) of the lithium transition metal oxide is 0.1 µm to 20 µm.

11. The positive active material of claim 1, further comprising a coating layer comprising a phosphorous-containing compound on a surface of the lithium transition metal oxide.

12. The positive active material of claim 11, wherein the phosphorous-containing compound comprises a compound represented by Formula 5:
Formula 5 LiₐP_{b}O_{c},
wherein 0<a≤3, 0<b≤1, and 0<c≤4.

13. The positive active material of claim 11, wherein the coating layer is arranged to cover at least a portion of the lithium transition metal oxide.

14. A method of preparing a positive active material, the method comprising:
obtaining a precursor of a lithium transition metal oxide by mixing a Li-containing compound, a Na-containing compound, a W-containing compound, a Mg-containing compound, a Ti-containing compound, an M-containing compound, and an S-containing compound; and
heat-treating the precursor to obtain a positive active material comprising a lithium transition metal oxide represented by Formula 1.
Formula 1 Li₁₋ₓNaₓM_{1-(α+β+γ)}W_{α}Mg_{β}Ti_{γ}O₂₋ₐSa,
wherein in Formula 1,
M includes one or more elements selected from alkali metal elements, alkali earth metal elements, transition metal elements, metalloid elements, and non-metallic elements, other than W, Mg, Ti, Na, and S, and
0<x≤0.01, 0<α≤0.01, 0<β≤0.005, 0<γ≤0.005, 0<a≤0.01, and 0<α+β+γ≤0.02.

15. The method of preparing a positive active material of claim 14, wherein the mixing process comprises mechanical mixing process.

16. The method of preparing a positive active material of claim 14, wherein
the heat-treating comprises a first heat treatment, and a second heat treatment,
and a heat treatment temperature of the first heat treatment is higher than a heat treatment temperature of the second heat treatment.

17. A lithium secondary battery comprising:
a positive electrode comprising the positive active material according to any one of claims 1 to 13;
a negative electrode; and
an electrolyte;

18. The lithium secondary battery of claim 17, wherein the lithium secondary battery has a capacity retention rate of 90 % or more after 100 charge/discharge cycles.
